# EUROPÄISCHE PATENTSCHRIFT

(11) **EP 4 063 313 B1**
(45) Veröffentlichungstag und Bekanntmachung des Hinweises auf die Patenterteilung: **20.08.2025**
(21) Anmeldenummer: 22153083.5
(22) Anmeldetag: 25.01.2022
(51) Int. Cl.: B67C 7/00, B29C 49/42, B67C 3/22

(54) **ABFÜLLANLAGE ZUR ASEPTISCHEN ABFÜLLUNG FLÜSSIGER PRODUKTE IN FLASCHEN**
FILLING SYSTEM FOR ASEPTICALLY DISPENSING LIQUID PRODUCTS INTO CONTAINERS
INSTALLATION DE REMPLISSAGE EN BOUTEILLE ASEPTIQUE DE PRODUITS LIQUIDES

(30) Priorität: 26.03.2021 DE 102021107727
(43) Veröffentlichungstag der Anmeldung: 28.09.2022
(73) Patentinhaber: Krones AG, 93073 Neutraubling (DE)
(72) Erfinder: PETER, Michael, 93073 Neutraubling (DE); SOELLNER, Juergen, 93073 Neutraubling (DE)
(74) Vertreter: Grünecker Patent- und Rechtsanwälte PartG mbB

(56) Entgegenhaltungen:
- EP-A1- 3 088 313
- EP-A1- 3 666 497
- WO-A1-2013/094587
- WO-A1-2020/179521
- DE-A1- 102011 122 853
- DE-A1- 102016 110 016
- DE-U1- 202009 019 170
- JP-A- 2014 240 305

## Beschreibung

Die Erfindung betrifft eine Abfüllanlage zur aseptischen Abfüllung flüssiger Produkte, insbesondere Getränke.

Flüssige Produkte, wie beispielsweise Getränke, werden zunehmend in Abfüllanlagen abgefüllt, bei denen die einzelnen Herstellungseinheiten, Behandlungseinheiten und Inspektionseinheiten ausschließlich mittels Transfersternen oder dergleichen Transportmittel mit umlaufenden Transporttaschen und/oder Haltern verbunden sind. Eine transporttechnisch derart verblockte Maschinenkombination wird üblicherweise als Maschinenblock bezeichnet. Ein derartiger Maschinenblock ist beispielsweise aus der DE 20 2009 019 170 bekannt.

Um gegebenenfalls auch unterschiedliche Behälter und/oder unterschiedliche Produkte gleichzeitig verarbeiten zu können, ist es aus der DE 10 2016 110 016 und der FR 4 070 970 zudem bekannt, einen Behälterstrom unmittelbar hinter einer Blasmaschine in zwei Transportstränge aufzuteilen und diese zwei nachgeschalteten Füllmaschinen zuzuführen. Gemäß der FR 4 070 970 können die Behälter an einem Umschaltstern abwechselnd einer ersten und zweiten Füllmaschine zugeführt werden, um die Behälter optional an beiden Füllmaschinen mit demselben Produkt zu befüllen. Bei der DE 10 2016 110 016 erfolgt der Transport der Behälter in den Transportsträngen mittels eines Förderbands bis zur jeweiligen Füllmaschine.

Neben einer Flexibilisierung von Abfüllprozessen im Allgemeinen wird zunehmend auch eine Steigerung der Anlagenleistung, also der pro Zeiteinheit abfüllbaren Behälter, gefordert. Als limitierend hat sich hierbei nicht nur der physikalisch bedingt nicht beliebig zu verkürzende Füllprozess erwiesen, sondern auch die unmittelbar anschließende Handhabung der befüllten Behälter. Es hat sich herausgestellt, dass das eingefüllte Produkt mit zunehmender Transportgeschwindigkeit bei Richtungswechseln überschwappen kann. Zudem wird der Verschließprozess aufgrund der hohen Umfangsgeschwindigkeiten des Systems unsicherer. Auch ist das Zuführen von Verschlusskappen bei entsprechend schnellen Verschließvorgängen problematisch. Außerdem können Klammern, insbesondere Neckklammern, die den Behälter im Halsbereich unterhalb des Tragrings greifen, in passiver Ausführung die Fliehkräfte, die auf den Behälter wirken, nur bis zu einem bestimmten Punkt halten. Beim Befüllen in der Füllmaschine nehmen die Fliehkräfte stark zu, weil das in den Behälter fließende Produkt das Gewicht des Behälters erhöht. Hier ist je nach Flaschenkontur, Füllhöhe und abgefülltem Produkt erfahrungsgemäß bereits Maschinenleistungen ab etwa 48.000 Flaschen pro Stunde ein physikalisches Maximum erreicht.

Sollte es an der Maschine zudem zu einem mechanischen Stau der Flaschen kommen, entstehen aufgrund der sehr hohen Bahngeschwindigkeit gravierende Schäden, deren Reparatur sehr zeit- und kostenintensiv ist.

Zusätzlichen technischen Aufwand verursacht die aseptische Abfüllung, für die Anlagenleistungen von 8.000 bis 54.000 Flaschen pro Stunde üblich sind. Hierfür werden die Flaschen beim Transport durchweg im Neckhandling gehandhabt. Im oberen Leistungsbereich sind dann vergleichsweise große Füllmaschinen notwendig, die als sogenannte Karussellfüller mit einem ringförmig integrierten aseptischer Bereich vergleichsweise aufwändig und raumgreifend ausgeführt werden, wobei der aseptische Bereich beispielsweise durch eine Flüssigkeitssperre bei Rotation hydraulisch abzudichten ist. Ähnliche Anforderungen gelten für die Verschließmaschinen.

Wie voranstehend erläutert ist, nehmen bei Maschinenleistungen über 36.000 Flaschen pro Stunde technische Probleme beim Neckhandling überhand, und zwar hinsichtlich des mechanischen Verschleißes und der erforderlichen Präzision. Es ist dann unumgänglich, die Flaschen zusätzlich mit Führungsgarnituren am Flaschenrumpf zu stabilisieren. Die Führungsgarnituren sind formatspezifisch einzustellen, was jedoch nicht automatisch möglich und daher nachteilig ist.

Bei Maschinenleistung von bis zu 36.000 Flaschen pro Stunde können alternativ zu Karussellfüllern auch sogenannte Tischplattenfüller eingesetzt werden, an denen die Flaschen mittels eines Sterns während der Abfüllung transportiert werden. Entsprechende Konstruktionsprinzipien sind beispielsweise aus der EP 0 758 624 A1, EP 1 851 147 B1, EP 1 254 071 B1 und DE 20 2007 017 932 U1 bekannt. Vorteilhaft ist beim Tischplattenaufbau, dass hierfür kein zusätzlicher aseptischer Bereich innerhalb der Füllerbaugruppe benötigt wird.

Je nach Leistung der Anlage können somit auch unterschiedliche Fülleraufbauten zum Einsatz kommen, wofür dann aber die Reinraum-Einhausung, der Reinigungsprozess und die Lüftung / Luftaufbereitung jeweils entsprechend angepasst werden müssen. Dies verursacht einen hohen individuellen Konstruktionsaufwand für jede einzelne Abfüllanlage.

Auch wäre es wünschenswert, den Auslauf der verschlossenen Behälter kompakter auszubilden, da anschließende Auslaufbänder eingangsseitig bisher lange geradlinige Abschnitte aufweisen müssen, um den Flaschenstrom ausreichend abzubremsen und fehlerhafte Flaschen gegebenenfalls ausleiten zu können.

Es besteht daher Bedarf für Abfüllanlagen und Verfahren zur Abfüllung flüssiger Produkte, bei denen die Flaschen in einem Maschinenblock aseptisch hergestellt und abgefüllt werden können und wenigstens eines der oben genannten Probleme abgemildert oder ganz beseitigt werden kann. Auch ist es wünschenswert, eine möglichst einfache und flexible Bedienung und Steuerung der Abfüllanlage und des Verfahrens zu ermöglichen.

Die gestellte Aufgabe wird mit einer Abfüllanlage gemäß Anspruch 1 gelöst.

Demnach dient die Abfüllanlage zur aseptischen Abfüllung flüssiger Produkte, insbesondere Getränke, in Flaschen oder der gleichen Behälter. Die Abfüllanlage umfasst zu diesem Zweck einen Maschinenblock, bei dem die einzelnen Herstellungseinheiten, Behandlungseinheiten und/oder Inspektionseinheiten mittels sternförmiger Transportmittel, wie beispielsweise Transfersternen, transporttechnisch miteinander verblockt verbunden sind, und wenigstens eine den Maschinenblock umgebende Reinraum-Einhausung.

Der Maschinenblock umfasst: eine Blasmaschine zur Herstellung von Flaschen und zu deren Bereitstellung als Flaschenstrom; wenigstens einen ersten und zweiten Transportstrang mit je einer Füllmaschine zum Befüllen der Flaschen; und eine Verteileinheit zur Aufteilung des Flaschenstroms auf die Transportstränge bei Transportvollbesetzung derart, dass die Flaschen durchgehend an allen umlaufenden Füllpositionen der Füllmaschinen befüllt werden können. Wenigstens eine der Füllmaschinen ist als Tischplattenfüller mit zentraler Sternsäule (Sternsäulenfüller) ausgebildet.

Vorzugsweise sind alle Füllmaschinen der Abfüllanlage als Tischplattenfüller ausgebildet.

Dadurch, dass der Flaschenstrom auf die Transportstränge aufgeteilt wird, kann der apparative Aufwand für die einspurige Herstellung der Flaschen stromaufwärts der Verteileinheit minimiert werden. Gleichzeitig kann die Transportgeschwindigkeit in den Transportsträngen gegenüber dem einspurigen Flaschenstrom reduziert werden, wodurch die Füllprozesse an vergleichsweise kleinen Füllmaschinen mit entsprechend geringem Platzbedarf durchgeführt werden können und ein Überschwappen des eingefüllten Produkts vermieden werden kann.

Zudem ist die Zuführung von Verschlusskappen für das anschließende Verschließen zuverlässiger möglich, sowie der Verschließprozess an sich stabiler. Auch kann die Auslaufgeschwindigkeit auf den Auslauftransporteuren gegenüber der Transportgeschwindigkeit des einspurigen Flaschenstroms insgesamt reduziert werden. Dies erleichtert das Ausleiten nicht ordnungsgemäß befüllter und/oder verschlossener Behälter oder allgemein für Servicezwecke. Insgesamt wirkt sich das Prinzip nicht nur positiv auf den laufenden Produktionsbetrieb aus, sondern auch auf die Installation und Inbetriebnahme der Maschinen.

Unter einer Transportvollbesetzung ist zu verstehen, dass die Flaschen ohne Auslassen von Transportpositionen und Behandlungspositionen von der Blasmaschine bis einschließlich zu den Füllmaschinen transportiert werden können. Allerdings können einzelne Transportpositionen und Behandlungspositionen insbesondere dann gezielt freigelassen werden, wenn eine Betriebsstörung beispielsweise an einer der Füllmaschinen vorliegt. Ein gezieltes Auslassen von Transportpositionen und Behandlungspositionen ist beispielsweise möglich, indem Flaschen aus dem einspurigen Flaschenstrom oder aus dem daraus gebildeten Teilstrom eines Transportstrangs ausgeleitet werden, oder indem beispielsweise nur jede zweite umlaufende Blasposition (Blasform) der Blasmaschine mit einem Vorformling bestückt wird.

Die Tischplattenfüller können für unterschiedliche Leistungsbereiche als Typenreihe konstruiert und modular miteinander kombiniert werden. Geeignete Leistungsabstufungen der einzelnen Typen des Tischplattenfüllers sind beispielsweise bei 8.000, 12.000, 18.000, 24.000 und 36.000 Flaschen pro Stunde.

Tischplattenfüller werden auch als Sternsäulenfüller bezeichnet.

Ein Tischplattenfüller / Sternsäulenfüller im Sinne der Erfindung weist wenigstens eines der folgenden Konstruktionsmerkmale auf:
- Der Tischplattenfüller umfasst eine Tischplatte, die von der Bodenplatte der den Tischplattenfüller umgebenden Reinraum-Einhausung gebildet wird.
- Der Tischplattenfüller umfasst einen Drehantrieb, der unterhalb der Tischplatte / unterhalb der Bodenplatte der den Tischplattenfüller umgebenden Reinraum-Einhausung angeordnet ist.
- Der Tischplattenfüller umfasst eine vom Drehantrieb kontinuierlich angetriebene und durch die Bodenplatte / Tischplatte hindurchgeführte Sternsäule.
- Auf der Sternsäule sitzt ein Füllerkarussell.
- Das Füllerkarussell umfasst einen Klammerträger mit Klammern zur Aufnahme der Flaschen und einen darüber angeordneten Füllventilträger mit Füllventilen und zugehörigen mitrotierenden Versorgungseinheiten.
- Die Tischplatte / Bodenplatte ist ferner zur Aufnahme von Sternsäulen des vom Tischplattenfüller umfassten Einlaufsterns und Auslaufsterns und/oder der anschließenden Verschließmaschine ausgebildet.

Im Vergleich dazu haben die sogenannten Karussellfüller größere Durchmesser und passen nicht ohne weiteres in übliche Reinräume mit rechteckigem Grundriss. Daher ragt in der Regel ein Teil des Umfangs des Karussellfüllers zusätzlich eingehaust aus dem ansonsten im Wesentlichen quaderförmigen Reinraum heraus. Im Inneren des Karussellfüllers, radial innerhalb der Füllventile und entlang der Maschinenachse, ist eine zusätzliche Reinraumwand vorhanden. Auf diese Weise wird für den Karussellfüller ein aseptischer Ringraum bereitgestellt, in dem gefüllt wird. Da das Innerste des Füllers aufgrund dieses Ringraums nicht in einem Reinraumbereich angeordnet ist, ist der Antrieb Karussellfüllers direkt mit seiner Sternsäule verbunden und nicht durch eine Tischplatte geführt.

Für Leistungen über 36.000 Flaschen pro Stunde umfasst die Abfüllanlage dann zwei parallel geschaltete Tischplattenfüller. Die Medienversorgung, insbesondere Produktzufuhr, Lüftung und Reinigung (CIP) ist hierbei zentral möglich, also für beide Füllmaschinen gemeinsam.

Somit ist eine modulare Konstruktion der Abfüllanlage mit einheitlichem Aufbau der Füllmaschinen und bei reduzierter Transportgeschwindigkeit ab dem Füllen der Flaschen möglich. Damit verbundene Vorteile sind beispielsweise:
- Geringere mechanische Belastungen der Bauteile. Das Neckhandling-Klammersystem kann geforderte Standzeiten von beispielsweise einem Jahr auch bei Maximalauslastung erfüllen. Zuverlässigere Flaschenübergaben im Neckhandling.
- Fertigungstoleranzen sind für geringere Relativgeschwindigkeiten leichter einzuhalten.
- Die vergleichsweise kleinen Maschinen ermöglichen eine Fertigung auf Lager bei Verkürzung der Durchlaufzeit in der Fertigung und somit zukunftsfähige Produktionskonzepte.
- Auch bei Maximalauslastung kann Überschwappen von Produkt bei/nach Kurvenfahrten zuverlässig vermieden werden.
- Die Stückzahl gefertigter Baugruppen kann erhöht werden und somit auch die Kosteneffizienz und der Standardisierungsgrad sowohl in Fertigung als auch im Produktionsbetrieb.
- Kürzere Aufstellzeiten, da die geringeren Bahngeschwindigkeiten der Transportstränge die Anforderungen an die bei der Installation erforderliche Präzision reduzieren, sowie schnellere Inbetriebnahme.
- Geringere Kesselhöhen und vereinfachte Entlüftung der Füllventile, da die Produktleitungen vom Kessel zum Füllventil deutlich kürzer ausgelegt werden können.
- Drucktragende Teile wie Füllerkessel werden bezogen auf die Leistung kleiner, wodurch sich die Einhaltung lokaler Druckgerätelinien vereinfacht.
- Bei Ausführungsformen mit zwei Tischplattenfüllern können diese als Tragwerk für die Bühnenplatte der Abfüllanlage verwendet werden. Eine zusätzliche Bühnenunterkonstruktion ist dann entbehrlich.
- Zuverlässigerer und schonenderer Flaschenauslauf bei entsprechend niedrigerer Relativgeschwindigkeit der Flaschen.
- Teillastbetrieb ist bei Ausfall einer Füllmaschine (50%-Betrieb) möglich.

Vorzugsweise sind die Blasmaschine und die Verteileinheit in einer ersten Reinraum-Einhausung, der erste Transportstrang samt Füllmaschine in einer zweiten Reinraum-Einhausung und der zweite Transportstrang samt Füllmaschine in einer dritten Reinraum-Einhausung angeordnet. Dies begünstigt den Teillastbetrieb auch bei einer außer Betrieb genommenen Füllmaschine.

Vorzugsweise umfasst die Abfüllanlage eine Luftaufbereitungseinheit zur gemeinsamen Luftversorgung der ersten, zweiten und dritten Reinraum-Einhausung. Dies vereinfacht die Lüftungstechnik. Die komplette Luftaufbereitung kann so in einer einzigen Funktionseinheit zusammengefasst werden, sodass die Anzahl von Filter-Lüfter-Einheiten reduziert werden kann und/oder diese nicht mehr auf dem Maschinengehäuse platziert werden müssen. Alle Filter und Ventilatoren sind vorzugsweise in die Luftaufbereitungseinheit integriert, die dann auch die zugehörige Verrohrung umfasst, beispielsweise eine zentralisierte Abluftverrohrung. Zudem wird eine gerichtete Luftführung ohne Druckkaskade begünstigt.

Vorzugsweise umfasst die Abfüllanlage eine außerhalb der zweiten und dritten Reinraum-Einhausung angeordneten Zusammenführeinrichtung zum Zusammenführen der Transportstränge auf einen gemeinsamen Auslauftransporteur zum stehenden Transport der gefüllten und verschlossenen Flaschen. Die Flaschen können so auf einen vergleichsweise langsamen Auslaufstrom zur anschließenden Etikettierung zusammengefasst werden.

Die Zusammenführeinrichtung ermöglicht eine Kapazitätserhöhung durch Parallelschaltung der Füllmaschinen bei Abfüllung desselben Produkts in beiden Füllmaschinen. Die auf gleiche Weise abgefüllten Flaschen können dann als einheitlicher Flaschenstrom auslaufen. Hierbei kann der Platzbedarf für die Füllmaschinen und den Flaschenauslauf geringgehalten werden.

Alternativ sind die Blasmaschine, die Transportstränge samt Füllmaschinen und die Verteileinheit in einer gemeinsamen Reinraum-Einhausung angeordnet. Dies reduziert den apparativen Aufwand und ermöglicht einen einfacheren Zugang und eine flexiblere Anordnung der einzelnen Baugruppen.

Vorzugsweise umfasst die Abfüllanlage dann ferner eine innerhalb der gemeinsamen Reinraum-Einhausung angeordneten Zusammenführeinrichtung zum Zusammenführen der Transportstränge auf einen gemeinsamen Auslauftransporteur zum stehenden Transport der gefüllten und verschlossenen Flaschen. Es ist dann nur eine ausgangsseitige Reinraumschleuse für die Flaschen erforderlich.

Die entlang der Transportstränge geführten Teilströme können generell auch getrennt voneinander ausgeschleust werden, beispielsweise um damit unterschiedliche Etikettiermaschinen zu beschicken.

Vorzugsweise umfasst die Abfüllanlage den Füllmaschinen jeweils nachgeschalteten und wenigstens eingangsseitig höhenverstellbaren Teilauslauftransporteure für den stehenden Transport der gefüllten und verschlossenen Flaschen. Dies ermöglicht eine einfache Formatanpassung des Flaschenauslaufs an die jeweilige Flaschenhöhe.

Im Bereich der vorgeschalteten Verschließmaschine können dann automatisch verstellbare Führungselemente für die Flaschen insbesondere in Form auswechselbarer Garnituren vorhanden sein.

Die Auslauftransporteure und/ oder die Zusammenführeinrichtung können Bestandteil des Maschinenblocks sein oder als daran angeschlossene Einheiten mit grundlegend eigenständiger Funktion ausgebildet sein.

Vorzugsweise umfasst der Aufteilstern mittels daran umlaufender Betätigungselemente und zugeordneter stationärer Betätigungselemente aktiv zu öffnende Klammern. Die dem ersten Transportstrang zugeordneten Betätigungselemente sind dann auf einer ersten gemeinsamen Betätigungsebene und die dem zweiten Transportstrang zugeordneten Betätigungselemente auf einer zweiten gemeinsamen Betätigungsebene oberhalb oder unterhalb der ersten Betätigungsebene angeordnet. Die Betätigungselemente sind dann so angeordnet, dass sie sich bezüglich der Betätigungsebenen voneinander unabhängig betätigen lassen.

Anders gesagt wirkt das stationäre Betätigungselement der ersten Betätigungsebene nur mit den umlaufenden Betätigungselementen der ersten Betätigungsebene zusammen und das stationäre Betätigungselement der zweiten Betätigungsebene nur mit den umlaufenden Betätigungselementen der zweiten Betätigungsebene. Dies ermöglicht eine platzsparende und einfach zu konstruierende Stromaufteilung durch selektives Öffnen der Klammern entweder an einem ersten Übergabepunkt zum ersten Transportstrang oder an einem zweiten Übergabepunkt zum zweiten Transportstrang.

Die umlaufenden Betätigungselemente sind beispielsweise um vertikale Achsen drehbare Drehriegel. Die stationären Betätigungselemente sind beispielsweise als Betätigungsnocken ausgebildet, die durch Kollision mit den Drehriegeln diese um die vertikalen Achsen drehen, um die Klammen zu betätigen. Dies ist von Transfersternen prinzipiell für eine Betätigung in einer einzigen Betätigungsebene bekannt.

Prinzipiell denkbar wären auch Aufteilsterne anderer Bauart, beispielsweise ein Umschaltstern mit einer umschaltbaren Steuerkurve, ein Schiebestern mit radial verschiebbaren Klammern, ein Transferstern mit einem umfänglich verlaufenden Linearmotorsystem für einzelne Klammern oder dergleichen.

Vorzugsweise umfassen die Transportstränge jeweils wenigstens einen Teilungsverzugsstern zur Reduzierung einer ersten Transportteilung bei/unmittelbar vor der Aufteilung des Flaschenstroms auf eine dem gegenüber kleinere zweite Transportteilung beim Befüllen der Flaschen.

Der Teilungsverzugsstern ist dann vorzugsweise unmittelbar im Anschluss an den Aufteilstern angeordnet, nimmt also von diesem die Flaschen entgegen und ändert dann bei weiterer Drehung um sich selbst die erste Transportteilung und stellt dabei insbesondere die zweite Transportteilung her.

Ein Teilungsverzugsstern kann prinzipiell als ein Umschaltstern mit einer umschaltbaren Steuerkurve, ein Schiebestern mit radial verschiebbaren Klammern, ein Transferstern mit einem umfänglich verlaufenden Linearmotorsystem für einzelne Klammern ausgebildet sein.

Dadurch wird eine vergleichsweise kompakte Aufteilung des Flaschenstroms bei gleichzeitiger Anpassung der Transportteilung und bei vergleichsweise hohen Transportgeschwindigkeiten ermöglicht. Die Transportteilung wird hierbei unter Einhaltung einer Vereinzelung der Behälter, also im Abstand zueinander, angepasst.

Erfindungsgemäß umfasst die Abfüllanlage ferner einen zentralen Produktverteiler zur Versorgung der Füllmaschinen mit abzufüllendem Produkt aus einem gemeinsamen Produktvorrat, insbesondere Vorratstank, und/oder einen zentralen Verschlusskappenverteiler zur Versorgung von den Füllmaschinen zugeordneten Verschließmaschinen mit Verschlusskappen aus einem gemeinsamen Verschlusskappenvorrat, insbesondere Vorratsbehälter.

Der Produktverteiler ist beispielsweise ein sogenannter Ventilknoten, über den das Produkt zu den einzelnen Füllventilen der Füllmaschinen geleitet wird.

Der Verschlusskappenverteiler ist beispielsweise eine kaskadenförmige Anordnung von Zulaufrinnen, die aus dem Vorratsbehälter zu den Verschließmaschinen führen.

Eine derartige Verteilung von Produkt und/oder Verschlusskappen reduziert den Platzbedarf für den Produktvorrat und Verschlusskappenvorrat und vereinfacht die Bereitstellung und das Auffüllen der jeweiligen Vorräte.

Vorzugsweise umfasst die Abfüllanlage auch eine zentrale Reinigungseinheit zur CIP-Reinigung der Füllmaschinen oder des Maschinenblocks insgesamt mit zentraler Reinigungsmittelversorgung und -rückführung.

Vorzugsweise umfasst die Abfüllanlage ferner eine Steuereinrichtung zur gemeinsamen Steuerung der Füllmaschinen und/oder zur Steuerungssynchronisierung von an den Füllmaschinen vorhandenen Steuereinheiten. Die Steuerungssynchronisierung umfasst beispielsweise eine sortenspezifische Parameterübergabe insbesondere betreffend ein einheitlich abzufüllendes Produkt. Dies vereinfacht die Steuerung und Bedienung der Füllmaschinen.

Beispielsweise können Sortenparameter von einer Füllmaschine auf die andere übertragen werden, so dass nur eine (gemeinsame) Eingabe oder dergleichen Bedienschritt erforderlich ist. Die Füllmaschinen können nichtsdestoweniger jeweils eine eigenständige Bedieneinheit und/oder Anzeigeeinheit umfassen. Eine daran vorgenommene Eingabe kann dann auf die jeweils andere Füllmaschine dupliziert / gespiegelt angewendet werden.

Eine derartige gemeinsame Steuerung ermöglicht, dass die Füllmaschinen im Bedienkonzept des Maschinenblocks insgesamt als eine einzige Behandlungseinheit (Füllmaschine) dargestellt und/oder angesprochen werden. Die steuerungstechnische Zuordnung der Blaspositionen (Blasformen) der Blasmaschine und der Füllpositionen (Füllorgane) der Füllmaschinen ist durch Zuordnung entsprechender Schieberegister der jeweiligen Steuereinrichtungen möglich.

Die gemeinsame Steuereinrichtung und/oder die einzelnen Steuereinheiten der Füllmaschinen können beispielsweise in einem gemeinsamen Schaltschrank angeordnet werden.

Die gemeinsame Steuerung der Füllmaschine ermöglicht eine eindeutige Zuordnung der für die jeweilige Flasche verwendeten Blaspositionen (Blasformen) und Füllpositionen (Füllorgane), um eine Rückverfolgbarkeit der befüllten Flaschen durch die Wertschöpfungskette der Abfüllanlage zu ermöglichen. Auch können wenigstens eine stromabwärts vorhandene Etikettiermaschine und daran vorhandene Etikettierpositionen zugeordnet werden.

Vorzugsweise umfasst die Abfüllanlage, insbesondere die gemeinsame Steuereinrichtung, ein zentrales Basisgerät zur Steuerung der Inspektionstechnik für die Ausläufe beider Transportstränge. Ein derartiges Kontrollsystem kann folgende prinzipiell bekannten Funktionen aufweisen: Vollgutkontrolle für Füllmaschinen und Verschließmaschinen beispielsweise umfassend: Füllhöhenkontrolle (mittels Hochfrequenz-, Infrarot-, Kamera-, Gamma- oder Röntgentechnik); Verschluss- und Sicherungsring-Erkennung (mittels Sensor- und Kameratechnik); Füllmaschinenmanagement; Produktionsmanagement; Qualitätsmanagement; Sicherheitsmanagement; und/oder Verstellung von Führungsgeländern und/oder Inspektionshöhe.

Vorzugsweise umfasst die Abfüllanlage ferner ein der Blasmaschine vorgeschaltetes Heizmodul zum Erwärmen von Vorformlingen und eine zwischen diesem und der Blasmaschine angeordnete Entkeimungseinheit zur Entkeimung der Vorformlinge.

Das Heizmodul umfasst vorzugsweise einen eingangsseitigen Sperrstern zum gesteuerten Freigeben und Blockieren der Zufuhr der Vorformlinge, wobei der Sperrstern mittels eines Schrittmotors drehangetrieben ist. Der Schrittmotor ermöglicht eine taktgenaue Freigabe und Zufuhr einerseits und Blockierung und Zurückhaltung einzelner Vorformlinge andererseits, beispielsweise falls keine oder nur jede zweite Blasposition der Blasmaschine zu beschicken ist.

Durch die präzise Steuerung und Bewegung des Schrittmotors, beispielsweise im Vergleich zu bekannten pneumatischen Sperreinheiten, können die Steuersignale für den Schrittmotor unmittelbar in das jeweilige Maschinenschieberegister eingetragen werden und ermöglichen so eine Steuerung der Zuführung von Vorformlingen ohne Bedarf für zusätzliche Sensorik zur Anwesenheitskontrolle von Vorformlingen oder Flaschen. Zudem entfällt dann der Aufwand zur Einrichtung und Inspektion entsprechender Sensoren, die bisher wegen der relativ hohen Transportgeschwindigkeiten präzise eingestellt und häufig kontrolliert werden mussten.

Das beschriebene Verfahren dient zur aseptischen Abfüllung flüssiger Produkte, insbesondere Getränke, in Flaschen oder der gleichen Behälter.

Die Flaschen werden in einer Blasmaschine hergestellt, auf wenigstens einen ersten und zweiten Teilstrom aufgeteilt, und jeder Teilstrom wird in einer separat zugeordneten Füllmaschine befüllt. Die Flaschen werden von der Herstellung bis zum Befüllen unter aseptischen Bedingungen in einem Maschinenblock transportiert und gehandhabt. Ferner erfolgt die Abfüllung in wenigstens einem der Transportstränge in einer Füllmaschine vom Typ des Tischplattenfüllers mit zentraler Sternsäule. Damit lassen sich bezüglich des Anspruchs 1 beschriebene Vorteile erzielen.

Die Flaschen können nach einheitlicher Befüllung in den Füllmaschinen, also mit demselben Produkt, wieder zu einem gemeinsam auslaufenden Flaschenstrom zusammengeführt werden.

Bei voneinander hinsichtlich des Produkts abweichender Befüllung in den Füllmaschinen können die Flaschen auch als getrennte Flaschenströme auslaufen.

Vorzugsweise wird eine durch die Aufteilung des einspurigen Flaschenstroms erzeugte erste Transportteilung in den Transportsträngen durch Teilungsverzug auf eine zweite Transportteilung zum Befüllen der Flaschen reduziert. Das heißt, die Transportteilung der Teilströme wird vor dem Befüllen durch Teilungsverzug während umlaufenden Transports der Flaschen reduziert.

Vorzugsweise werden die Teilströme nach Abfüllung der Flaschen weiterhin und wenigstens bis zur Zusammenführung zu einem gemeinsamen Auslaufstrom unter aseptischen Bedingungen transportiert. Bei einer weiteren günstigen Ausführungsform werden die Teilströme nach Abfüllung der Flaschen getrennt aus dem Bereich der aseptischen Handhabung ausgeleitet und danach zu einem gemeinsamen Auslaufstrom zusammengeführt.

Der zusammengeführte Auslaufstrom kann vorteilhaft insgesamt einer Etikettiermaschine zugeführt werden, separat ausgeschleuste Teilströme dagegen jeweils individuell zugeordneten Etikettiermaschinen.

Vorzugsweise werden die Füllmaschinen bedienerseitig gemeinsam gesteuert durch Eingabe einheitlicher Sortenparameter und deren Anwendung in den Füllmaschinen mittels automatischer Übergabe der Sortenparameter von einer gemeinsamen Steuereinrichtung, insbesondere von einer Füllmaschine zur anderen.

Bevorzugte Ausführungsformen sind zeichnerisch dargestellt. Es zeigen:
- Fig. 1: eine schematische Draufsicht auf die Abfüllanlage in einer ersten Ausführungsform;
- Fig. 2: eine schematische Draufsicht auf eine Verteileinrichtung;
- Fig. 3: eine seitliche Teilansicht eines Aufteilsterns;
- Fig. 4: eine schematische Draufsicht auf die Abfüllanlage in einer zweiten Ausführungsform;
- Fig. 5: eine schematische Draufsicht auf die Abfüllanlage in einer dritten Ausführungsform; und
- Fig. 6: eine schematische Draufsicht auf den Einlaufbereich eines Heizmoduls der Abfüllanlage.

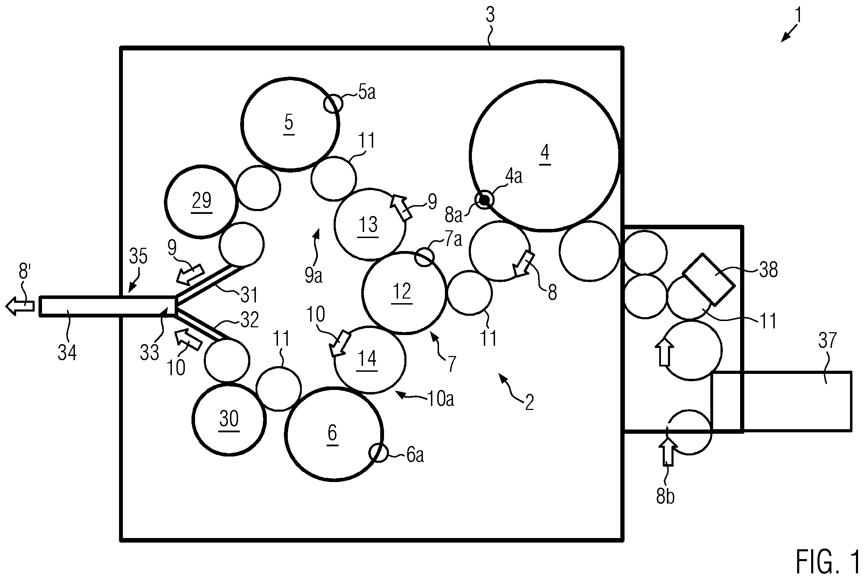

Wie die Fig. 1 erkennen lässt, umfasst die aseptisch arbeitende Abfüllanlage 1 in einer ersten vorteilhaften Ausführungsform einen Maschinenblock 2 und wenigstens eine diesen umgebende Reinraum-Einhausung 3. Der Maschinenblock 2 umfasst eine Blasmaschine 4, zwei Füllmaschinen 5, 6 sowie eine Verteileinrichtung 7 zum Aufteilen eines einspurigen Flaschenstroms 8 auf einen ersten Teilstrom 9 entlang eines ersten Transportstrangs 9a mit der ersten Füllmaschine 5 und auf einen zweiten Teilstrom 10 entlang eines zweiten Transportstrangs 10a mit der zweiten Füllmaschine 6.

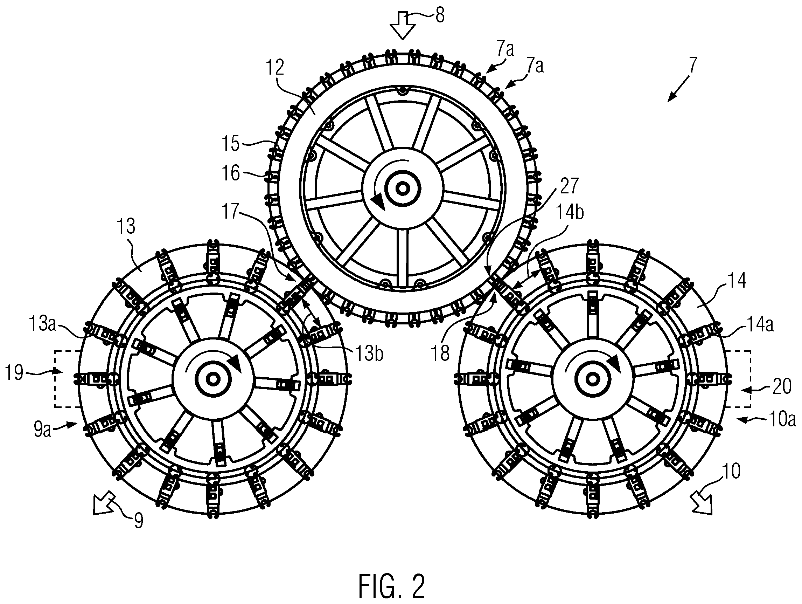

Der einspurige Flaschenstrom 8 besteht aus in der Blasmaschine 4 an kontinuierlich umlaufenden Blaspositionen 4a hergestellten Flaschen 8a (jeweils nur eine davon dargestellt). Die Verteileinrichtung 7 umfasst kontinuierlich umlaufende Transportpositionen 7a, siehe auch die Fig. 2.

Der Maschinenblock 2 zeichnet sich dadurch aus, dass sowohl der einspurige Flaschenstrom 8 als auch die daraus gebildeten Teilströme 9, 10 durchweg vereinzelt, also in festgelegtem Abstand zueinander, durch sternförmige Transportmittel 11 wie beispielsweise Transfersterne transportiert werden. Daraus ergibt sich eine miteinander verblockte Bauweise der Blasmaschine 4, der Füllmaschinen 5, 6 und der Verteileinrichtung 7.

Wenigstens eine der Füllmaschinen 5, 6, vorzugsweise beide, ist als Tischplattenfüller mit an einem Transportstern umlaufenden Füllpositionen 5a, 6a (nur jeweils eine davon dargestellt) ausgebildet. Das heißt, im Gegensatz zu einem Karussellfüller mit einem Behälterkarussell werden die Flaschen im Tischplattenfüller insbesondere per Neckhandling an einem Stern gehandhabt, der mittels einer Sternsäule auf einer Tischplatte kontinuierlich drehbar gelagert ist. Der Tischplattenfüller umfasst im Gegensatz zum Karussellfüller keinen intern beispielsweise durch Flüssigkeitssperre isolierten aseptischen Bereich um die Füllpositionen 5a, 6a mit ihren Füllorganen, sondern kann diesbezüglich frei in der jeweiligen Reinraumumgebung angeordnet werden.

Die Verteileinrichtung 7 umfasst einen Aufteilstern 12 und vorzugsweise unmittelbar daran anschließend Teilungsverzugssterne 13, 14.

Wie die Fig. 2 diesbezüglich erkennen lässt, umfasst der Aufteilstern 12 vorzugsweise eine Vielzahl umfänglich gleichmäßig daran verteilter erster Klammern 15, die jede zweite Flasche 8a des einspurigen Flaschenstroms 8, beispielsweise Flaschen mit ungerader Ordnungszahl, an den ersten Transportstrang 9a zur Bildung des ersten Teilstroms 9 übergeben, und zweite Klammern 16, die die im Flaschenstrom 8 jeweils dazwischen angeordneten Flaschen 8a, also beispielsweise solche mit gerader Ordnungszahl, an den zweiten Transportstrang 10a zur Bildung des zweiten Teilstroms 10 übergeben. Die Gesamtheit der Klammern 15, 16 entspricht den Transportpositionen 7a der Verteileinrichtung 7 für die Flaschen 8a. Die Teilungsverzugssterne 13, 14 umfassen mit jeder zweiten Transportposition 7a korrespondierende Klammern 13a, 14a.

Wie die Fig. 2 diesbezüglich ferner erkennen lässt, weisen die Teilungsverzugssterne 13, 14 bei der Übergabe der Flaschen 8a eine erste Transportteilung 13b, 14b auf. Diese entspricht der doppelten Transportteilung des Aufteilsterns 12 in dem Sinne, dass die Klammern 13a des ersten Teilungsverzugssterns 13 den ersten Klammern 15 des Aufteilsterns 12 zugeordnet sind und die Klammern 14a des zweiten Teilungsverzugssterns 14 den zweiten Klammern 16 des Aufteilsterns 12 (oder umgekehrt).

Die Teilungsverzugssterne 13, 14 sind dazu ausgebildet, die Transportteilung des ersten und zweiten Teilstroms 9, 10 gegenüber der ersten Transportteilung 13b, 14b auf eine zweite Transportteilung (nicht dargestellt) zu reduzieren, die vorzugsweise der Transportteilung (nicht dargestellt) der Füllpositionen 5a, 6a der Füllmaschinen 5, 6 entspricht.

Die ersten Klammern 15 des Aufteilsterns 12 werden, vorzugsweise wie nachfolgend beschrieben, an einem ersten Übergabepunkt 17 mit dem ersten Teilungsverzugsstern 13 gesteuert geöffnet, die zweiten Klammern 16 des Aufteilsterns 12 entsprechend an einem zweiten Übergabepunkt 18 mit dem zweiten Teilungsverzugsstern 14 und die Flaschen 8a dabei jeweils an die Transportstränge 9a, 10a übergeben.

Schematisch angedeutet sind ferner eine optionale erste Ausleiteinrichtung 19 für den ersten Teilstrom 9 und eine optionale zweite Ausleiteinrichtung 20 für den zweiten Teilstrom 10 zum selektiven Ausleiten von Flaschen 8a aus dem Transportstrang 9a, 10a im Falle einer Betriebsstörung des jeweils zugeordneten Füllers 5, 6. Es wäre auch denkbar, eine Ausleiteinrichtung zwischen der Blasmaschine 4 und der Verteileinrichtung 7 anzuordnen (nicht dargestellt).

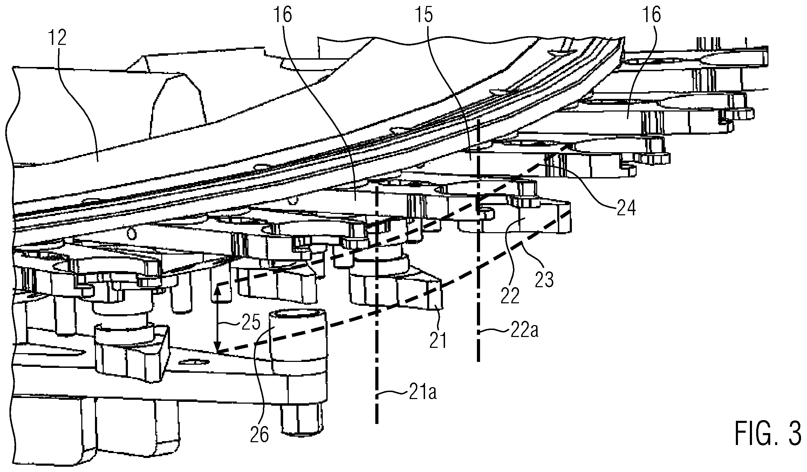

Die Fig. 3 zeigt einen bevorzugten Betätigungsmechanismus für die ersten und zweiten Klammern 15, 16. Demnach umfasst der Aufteilstern 12 jeder ersten Klammer 15 zugeordnet ein erstes umlaufendes Betätigungselement 21 und jeder zweiten Klammer 16 zugeordnet ein umlaufendes zweites Betätigungselement 22. Die Betätigungselemente 21, 22 sind vorzugsweise als um vertikale Achsen 21a, 22a drehbare Drehriegel ausgebildet, deren Drehung (je nach Drehrichtung) die jeweils zugeordnete Klammer 15, 16 öffnet (oder schließt).

Die den ersten Klammern 15 zugeordneten Drehriegel (umlaufende Betätigungselemente 21) sind in einer ersten gemeinsamen Betätigungsebene 23 angeordnet, die den zweiten Klammern 16 zugeordneten Drehriegel (umlaufende Betätigungselemente 22) in einer diesbezüglich nach oben (oder auch nach unten) steuerungstechnisch entkoppelnd versetzten zweiten Betätigungsebene 24.

Darunter ist zu verstehen, dass der Abstand 25 zwischen den Betätigungsebenen 23, 24 so groß ist, dass wenigstens ein in der ersten Betätigungsebene 23 angeordnetes stationäres (nicht umlaufendes) Betätigungselement 26, das beispielsweise als Steuernocken ausgebildet ist, nur die Drehriegel der ersten Betätigungsebene 23 und damit die ersten Klammern 15 betätigt und wenigstens ein in der zweiten Betätigungsebene 24 angeordnetes stationäres Betätigungselement 27 (beispielsweise ein in der Fig. 2 verdeckter Steuernocken) nur die Drehriegel 22 der zweiten Betätigungsebene 23 und damit die zweiten Klammern 16 betätigt.

Die stationären Betätigungselemente 26, 27 (Steuernocken) zum Öffnen der Klammern 15, 16 sind am Aufteilstern 12 im Bereich der Übergabepunkte 17, 18 angeordnet.

Ein derartiger Betätigungsmechanismus mit umlaufenden Betätigungselementen 21, 22 und stationären Betätigungselementen 26, 27 ermöglicht eine relativ einfache Konstruktion und eine platzsparende Aufteilung des Flaschenstroms 8. Somit ist ein zuverlässiges Schalten der Klammern 15, 16 im Bereich des jeweiligen Übergabepunkts 17, 18 mit hoher Transportgeschwindigkeit gegeben.

In der Fig. 1 sind mit den Füllmaschinen 5, 6 jeweils verblockte Verschließmaschinen 29, 30 zum Verschließen der Flaschen 8a im jeweiligen Teilstrom 9, 10 zu erkennen sowie diesen mittels Transfersternen 11 nachgeschaltete Teilauslauftransporteure 31, 32, welche im Wesentlichen den auslaufseitigen Abschluss der Transportstränge 9a, 10a ausbilden.

Die Teilauslauftransporteure 31, 32 sind beispielsweise als Förderbänder für aufrechtstehenden Flaschentransport ausgebildet und wenigstens eingangsseitig vorzugsweise höhenverstellbar. Dies begünstigt eine einfache Formatanpassung bei der Flaschenübernahme vom Neckhandling.

Die Transportstränge 9a, 10a bzw. die Teilauslauftransporteure 31, 32 vereinigen sich optional an einer (ebenso lediglich schematisch angedeuteten) Zusammenführeinrichtung 33, wie beispielsweise einer Weiche oder dergleichen transporttechnischen Zusammenschluss, zu einem gemeinsamen Auslaufstrom 8' der Flaschen 8a beispielsweise auf einem gemeinsamen Auslauftransporteur 34, der beispielsweise ebenso wenigstens ein Förderband für aufrechtstehenden Flaschentransport umfasst.

Der Auslaufstrom 8' besteht im Normalfall aus den Flaschen 8a des ursprünglich einspurigen Flaschenstroms 8, ist demgegenüber aber mehrspurig und entsprechend langsamer.

Im Bereich des gemeinsamen Auslauftransporteurs 34 kann beispielsweise ein (nicht dargestellter) Ausleittisch angeordnet sein, der beispielsweise der Serviceausleitung von Flaschen 8a aus dem Auslaufstrom 8' dient. Prinzipiell könnten auch getrennte Ausleittische an jedem der Teilauslauftransporteure 31, 32 vorgesehen sein. An jedem Ausleittisch ist dann ein Auffangbehälter (nicht dargestellt) für ausgeleitete Flaschen 8a vorhanden. Dem jeweiligen Ausleittisch kann eine Inspektionseinheit (nicht dargestellt) zugeordnet sein.

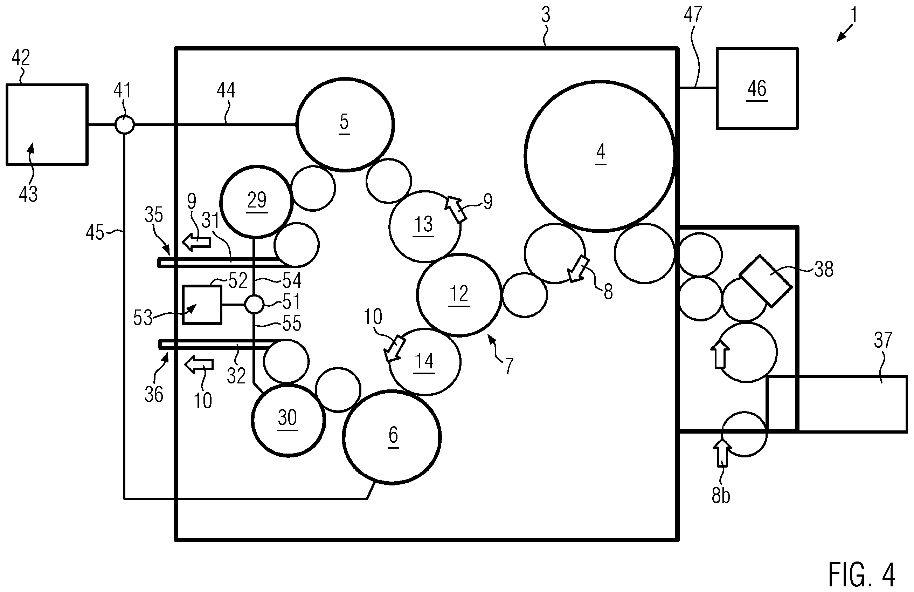

Die gefüllten Flaschen 8 verlassen den von der Reinraum-Einhausung 3 umschlossenen Bereich auf dem Auslauftransporteur 34 durch eine (schematisch angedeutete) Reinraumschleuse 35, die somit beiden Füllmaschinen 5, 6 zugeordnet ist. Wie die Fig. 4 diesbezüglich erkennen lässt, kann aber auch je eine Reinraumschleuse 35, 36 den Füllmaschinen 5, 6 separat zugeordnet sein.

Die Zusammenführeinrichtung 33 und der gemeinsame Auslauftransporteur 34 sind dann nicht vorhanden, sodass die Teilströme 9, 10 getrennt voneinander ausgeschleust und stromabwärts behandelt werden können, beispielsweise in zwei voneinander unabhängigen Etikettiermaschinen (nicht dargestellt). Demgegenüber wird der ausgeschleuste gemeinsame Auslaufstrom 8' vorzugsweise einer einzigen Etikettiermaschine (nicht dargestellt) zugeführt.

Wie die Fig. 1 erkennen lässt, umfasst die Abfüllanlage 1 ferner ein der Blasmaschine 4 eingangsseitig zugeordnetes Heizmodul 37 für Vorformlinge 8b sowie eine zwischen dem Heizmodul 37 und der Blasmaschine 4 angeordnete Entkeimungseinheit 38 zur Entkeimung der Vorformlinge 8b beispielsweise mittels Elektronenstrahl oder H₂O₂. Die Entkeimungseinheit 38 ist lediglich schematisch angedeutet kann auf prinzipiell bekannte Weise im Bereich eines Transfersterns 11 angeordnet sein.

Die Einhausung um die Entkeimungseinheit 38 (schematisch angedeutet) kann an den die Blasmaschine 4 umgebenden Reinraum 3, 3a lüftungsseitig angeschlossen sein. Ebenso denkbar ist hierfür eine eigenständige Belüftung / Entlüftung, beispielsweise zum Abziehen von Dämpfen, die bei der Entkeimung verursacht werden.

Im regulären Produktionsbetrieb der Abfüllanlage 1 werden die Vorformlinge 8b und die Flaschen 8a nominell bei Transportvollbesetzung transportiert und behandelt. Dies bedeutet, dass alle umlaufenden Blaspositionen 4a mit je einem Vorformling 8b sowie alle Transportpositionen 7a der Verteileinrichtung 7 und alle Füllpositionen 5a, 6a mit je einer Flasche 8a bestückt werden.

Obwohl die Abfüllanlage 1 für Transportvollbesetzung ausgebildet ist, sind davon abweichend auch andere Betriebsweisen denkbar, beispielsweise bei einer Betriebsstörung oder Umstellung in einem der Füller 5, 6. In diesem Fall kann vorübergehend nur jede zweite Blasposition 4a der Blasmaschine 4 mit einem Vorformling 8b bestückt werden, sodass die daraus geblasenen Flaschen 8a nur an jeder zweiten Transportposition 7a durch die Verteileinrichtung 7 zum jeweils weiterbetriebenen Transportstrang 9a, 10a geführt werden.

Die Verteileinrichtung 7 könnte alternativ einen Aufteilstern 12 in Form eines Schiebesterns, Teilungsverzugssterns oder dergleichen umfassen. In diesem Fall würde sich der Teilkreisdurchmesser und/oder die Transportteilung des Aufteilsterns 12 beim Umlauf der Flaschen 8a verändern, um den Flaschenstrom 8 auf den ersten und zweiten Teilstrom 9, 10 aufzuteilen und dabei beispielsweise eine Kollision von Klammern 15, 16 des Verteilsterns 12 mit jeweils nicht zugeordneten Klammern 13a, 14a anschließender Teilungsverzugssterne 13, 14 oder Transfersterne 11 zu verhindern und/oder bereits einen Teilungsverzug am Aufteilstern 12 vorzunehmen.

Zu diesem Zweck könnten die Klammern 15, 16 des Aufteilsterns 12 auf geeignete Weise relativ zum Aufteilstern 12 geschwenkt, verschoben und/oder umfänglich, also in oder entgegen ihrer Umlaufrichtung, bewegt werden, um die Flaschen 8a an den Übergabepunkten 17, 18 zu übergeben und dabei Kollisionen zwischen einander nicht zugeordneten Baugruppen zu vermeiden (welche Flaschen 8a am jeweils anderen Übergabepunkt 17, 18 übergeben).

Der Übersichtlichkeit halber sind in der Fig. 1 einige für die aseptische Abfüllung obligatorische Anlagenbestandteile weggelassen, beispielsweise die Produktversorgung, Reinraumlüftung und Maschinensteuerung. Diesbezüglich wird auf die Fig. 4 bis 6 verwiesen. Es versteht sich, dass auch nur einmalig beschriebene und/oder dargestellte Merkmale bei allen Ausführungsformen der Abfüllanlage 1 vorhanden sein können.

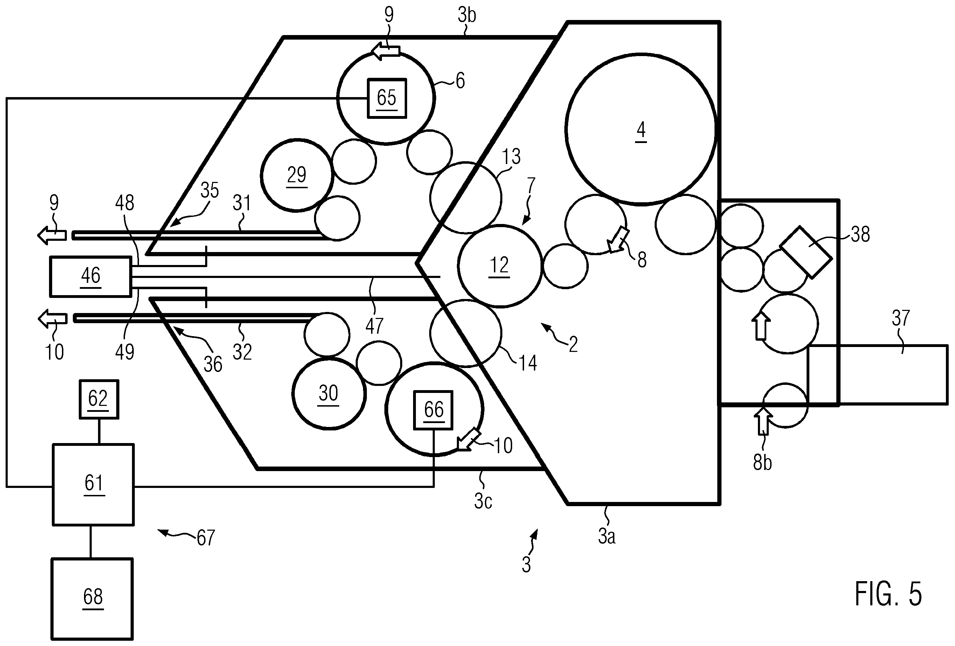

Die Fig. 4 und 5 zeigen alternative Konfigurationen der Abfüllanlage 1. Es werden entsprechende Bezugszeichen für einzelne Baugruppen und Produktströme verwendet, sodass zugehörige Strukturen und Funktionen nicht nochmals erläutert werden. Diese ergeben sich bei weggelassenen Bezugszeichen ferner aus dem dargestellten Zusammenhang.

Gemäß Fig. 4 ist ein Produktverteiler 41 zur gemeinsamen Produktversorgung der Füllmaschinen 5, 6 vorhanden, der eingangsseitig an einen Produkttank 42 mit gemeinsamem Produktvorrat 43 und ausgangsseitig über Versorgungsleitungen 44, 45 an die Füllmaschinen 5, 6 angeschlossen ist. In diesen wird das flüssige Produkt auf prinzipiell bekannte Weise auf die einzelnen Füllorgane an den Füllpositionen 5a, 6a verteilt. Der Produktverteiler 41 kann somit als zentraler Ventilknoten für die Füllorgane angesehen werden. Der Produktvorrat 43 könnte über den zentralen Produktverteiler 41 / Ventilknoten auch aus anderen zentralen Behältern oder Leitungen vorgehalten werden.

Ferner umfasst die Abfüllanlage 1 eine zentrale Luftaufbereitungseinheit 46, die über Lüftungskanäle 47 an die Reinraum-Einhausung 3 angeschlossen ist, um darin eine zur aseptischen Abfüllung geeignete Reinraumatmosphäre herzustellen. Einzelne Verfahren und Vorrichtungen für eine derartige Luftaufbereitung sind bekannt und daher nicht im Detail erläutert.

Dargestellt sind in der Fig. 4 die den Füllmaschinen 5, 6 zugeordneten Verschließmaschinen 29, 30 und ein Verschlusskappenverteiler 51, der eingangsseitig an einen Vorratsbehälter 52 mit einem Verschlusskappenvorrat 53 und ausgangsseitig mittels Zuführrinnen 54, 55 an die Verschließmaschinen 29, 30 angeschlossen ist.

Der Verschlusskappenverteiler 51 kann beispielsweise in eine kaskadenförmige Anordnung der Zuführrinnen 54, 55 integriert sein, die dann mit einem geeigneten Gefälle zum Transport der Verschlusskappen zu den Verschließmaschinen 29, 30 ausgebildet sind. Die Verschlusskappen können im Bereich vom Vorratsbehälter 52 bis zum Verschlusskappenverteiler 51 auf prinzipiell bekannte Weise auch besonders effizient entkeimt werden.

Mit dem Produktverteiler 41 und/oder dem Verschlusskappenverteiler 51 für die Füllmaschinen 5, 6 lässt sich der apparative Aufwand und der Bedienungsaufwand für das kontinuierliche Bereitstellen des Produktvorrats 43 und des Verschlusskappenvorrats 53 gegenüber einer separaten Bevorratung für die einzelnen Füllmaschinen 5, 6 reduzieren.

Die Fig. 5 zeigt eine Variante der Abfüllanlage 1 beispielhaft auf der Grundlage der in der Fig. 4 dargestellten Ausführungsform, wonach für die Blasmaschine 4 und die Verteileinheit 7 einerseits und jede der Füllmaschinen 5, 6 andererseits separate Reinraum-Einhausungen 3a, 3b, 3c vorhanden sind, die gemeinsam die Reinraum-Einhausung 3 des Maschinenblocks 2 ausbilden.

Die zentrale Luftaufbereitungseinheit 46 ist dann über erste Lüftungskanäle 47 an eine erste Reinraum-Einhausung 3a um die Blasmaschine 4 und Verteileinheit 7 angeschlossen, über zweite Lüftungskanäle 48 an eine zweite Reinraum-Einhausung 3b um die erste Füllmaschine 5 und über dritte Lüftungskanäle 49 an eine dritte Reinraum-Einhausung 3c um die zweite Füllmaschine 6.

Daraus ergibt sich, dass die gefüllten Flaschen 8 als Teilproduktströme 9, 10 durch separate Reinraumschleusen 35, 36 aus der jeweiligen Reinraum-Einhausung 3b, 3c ausgeschleust werden. Stromabwärts können die Teilproduktströme 9, 10 zusammengefasst oder getrennt voneinander weiterverarbeitet (nicht dargestellt), also beispielsweise gemeinsam oder getrennt voneinander etikettiert werden.

Die separaten Reinraum-Einhausungen 3a, 3b, 3c ermöglichen einen ungehinderten Produktionsbetrieb bei Teilauslastung der Abfüllanlage 1, wenn eine der Füllmaschinen 5, 6 zu Instandhaltungszwecken außer Betrieb ist.

Die zentrale Luftaufbereitungseinheit 46 ermöglicht dann eine flexible und wirtschaftliche Luftaufbereitung in den jeweils zur Produktion genutzten Reinraum-Einhausungen 3a, 3b, 3c.

Dies gilt ähnlich auch für die beschriebene zentrale Produktverteilung zu den Füllmaschinen 5, 6, die auch mit separaten Reinraum-Einhausungen 3a, 3b, 3c uneingeschränkt möglich ist.

Vorzugsweise umfasst die Abfüllanlage 1 eine zentrale CIP-Einheit zur Reinigung der Füllmaschinen 5, 6 und weiterer aseptischer Anlagenbereiche des Maschinenblocks 2. Die CIP-Einheit kann nach den für aseptische Produktionsbereiche bewährten Prinzipien arbeiten und ist daher weder dargestellt noch im Detail beschrieben.

Die Fig. 5 zeigt stellvertretend auch für die anderen beschriebenen Ausführungsformen eine Variante der Abfüllanlage 1, wonach die Füllmaschinen 5, 6 förderungstechnisch zu einer gemeinsam zu bedienenden Produkteinheit zusammengefasst sein können. Beispielhaft und schematisch dargestellt sind eine gemeinsame Steuereinrichtung 61 mit einer Eingabe- und Ausgabeeinheit 62, beispielsweise einem Touchscreen oder dergleichen, und an den Blasmaschinen 5, 6 vorhandene oder diesen an anderer Stelle zugeordnete Steuereinheiten 65, 66. Die Steuereinheiten 65, 66 können beispielsweise auch die den Füllmaschinen 5, 6 zugeordneten Verschließmaschinen 29, 30 auf prinzipiell bekannte Weise steuern.

Die gemeinsame Steuereinrichtung 61 und die ihr untergeordneten Steuereinheiten 65, 66 bilden ein Steuerungsmodul 67 aus, das in einem übergeordneten Steuerungssystem 68 der Abfüllanlage 1 als eine einzige Produktionseinheit eingebunden ist und bedient werden kann.

Somit können die Füllmaschinen 5, 6 insbesondere für die Abfüllung ein und desselben Produkts steuerungstechnisch wie eine einzige Maschine gehandhabt werden und auf einfache Weise an nur einem Eingabe- und Ausgabegerät 62 bedient werden. Dies vereinfacht nicht nur die Bedienung der Füllmaschinen 5, 6, sondern ermöglicht auch eine gemeinsame Speicherung von Sortenparametern in der gemeinsamen Steuereinrichtung 61 und eine einfache Übergabe derartiger Sortenparameter an die Füllmaschinen 5, 6. Das heißt, Bedienungsfehler durch gegebenenfalls unterschiedliche Eingaben für die Füllmaschinen 5, 6 können vermieden und die Zuordnung der Sortenparameter für die Füllmaschinen 5, 6 automatisiert werden.

Prinzipiell wäre es auch denkbar, die gemeinsame Steuereinrichtung 61 in einer der Steuereinheiten 65, 66 zu implementieren und/oder die gemeinsame Steuereinrichtung 61 automatisch derjenigen Steuereinrichtung 65, 66 zuzuordnen, an der eine Eingabe vorgenommen werden soll.

Sortenparameter können automatisch zwischen den Steuereinheiten 65, 66 der Füllmaschinen 5, 6 übergeben werden. Welches der oben genannten Bedienerkonzepte im jeweiligen Fall von Vorteil ist, hängt beispielsweise von der räumlichen Anordnung der Füllmaschinen 5, 6 im Maschinenblock 2 ab und/oder von der Ausstattung der einzelnen Füllmaschinen 5, 6 mit Eingabe- und Ausgabeeinheiten 62.

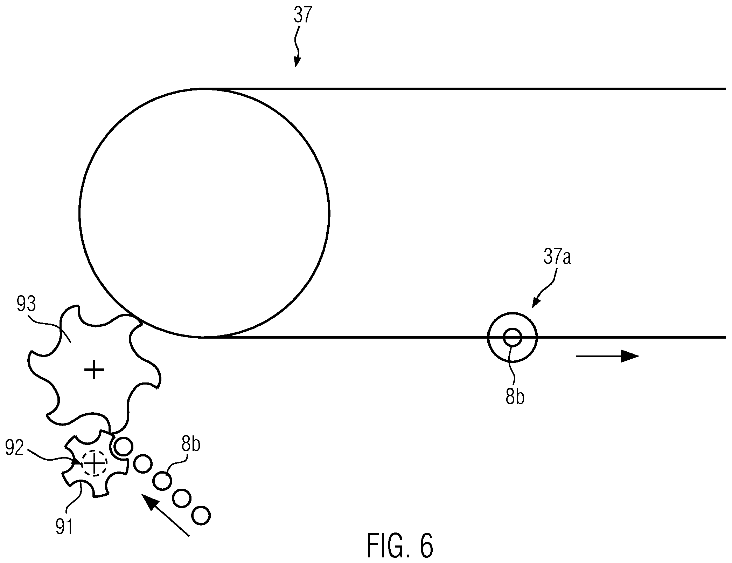

Die Fig. 6 zeigt eine bevorzugte Variante des Heizmoduls 37, bei dem eingangsseitig ein Sperrstern 91 vorhanden ist, der von einem Schrittmotor 92 (in Fig. 6 verdeckt) angetrieben wird. Der Sperrstern 91 dient zum maschinell gesteuerten Freigeben und Blockieren der Zuführung der Vorformlinge 8b in das Heizmodul 37. Ebenso kann die Zuführung der Vorformlinge 8b mittels des Schrittmotors 92 derart getaktet werden, dass nur jede zweite umlaufende Heizposition 37a (nur eine davon dargestellt) der Heizeinrichtung 37 mit einem Vorformling 8b bestückt wird und in der Folge ebenso nur jede zweite umlaufende Blasposition 4a der Blasmaschine 4.

Der Sperrstern 91 ist dann vorzugsweise stromaufwärts eines Sägezahnsterns 93 angeordnet, mit dem die Transportteilung der Vorformlinge 8b passend zu den umlaufenden Heizpositionen 37a hergestellt wird.

Der Schrittmotor 92 ermöglicht hierbei eine steuerungstechnisch präzise und einfach zu handhabende Zufuhr der Vorformlinge 8b. Zum einen ist die Zufuhr so mit höherer Geschwindigkeit und Präzision möglich als mit bekannten pneumatischen Sperrvorrichtungen. Zum anderen erübrigt die präzise und steuerungstechnisch zuverlässige Zufuhr der Vorformlinge 8b mittels des Schrittmotors 92 eine Überprüfung der einzelnen umlaufenden Heizpositionen 37a dahingehend, ob diese mit einem Vorformling 8b besetzt sind oder nicht. Das heißt, der Schrittmotor 92 ermöglicht eine derart präzise und zuverlässige Zuführung der Vorformlinge 8b, dass zusätzliche Sensoren zur obigen Kontrolle der Heizpositionen 37a und der damit verbundene Aufwand sowohl apparativ als auch bei der Einrichtung des Heizmoduls 37 entbehrlich sind.

Mit der Abfüllanlage 1 kann beispielsweise wie folgt gearbeitet werden:
Im normalen Produktionsbetrieb werden Sortenparameter vorzugsweise zur Abfüllung eines bestimmten Produkts in beiden Füllmaschinen 5, 6 an der gemeinsamen Steuereinrichtung 61 eingegeben und von dieser an die Steuereinheiten 65, 66 der Füllmaschinen 5, 6 übergeben und dort für den nachfolgenden Produktionsbetrieb bei Transportvollbesetzung angewendet.

Die Sortenparameter können zwischen den Füllmaschinen 5, 6 derart übertragen werden, dass nur eine gemeinsame Eingabe nötig ist.

Hierfür kann / können die gemeinsame Steuereinrichtung 61 und/oder die separaten Steuereinheiten 65, 66 der Füllmaschinen 5, 6 verwendet werden, gegebenenfalls mit gemeinsamer Darstellung oder getrennter Darstellung bezüglich des Steuerungssystems 68 der Abfüllanlage 1 insgesamt.

Ein Schieberegister kann auf die derart duplizierten Füllmaschinen 5, 6 aufgeteilt und die Produktionsdaten der Flaschen 8a der jeweils verwendeten Füllmaschine 5, 6 zugeordnet werden.

Entlang der Produktionskette in der Abfüllanlage 1 ist so eine eindeutige Zuordnung von Blasformen und Füllorganen möglich im Sinne einer Rückverfolgbarkeit der Flaschen 8a.

Die Vorformlinge 8b werden kontinuierlich allen Heizpositionen 37a des Heizmoduls 37 zugeführt und der einspurige Flaschenstrom 8 durch Blasen der Flaschen 8a an allen Blaspositionen 4a in der Blasmaschine 4 hergestellt.

Der Flaschenstrom 8 wird kontinuierlich der Verteileinrichtung 7 zugeführt. Diese verteilt die Flaschen 8a von jeder zweiten Transportposition 7a abwechselnd auf den ersten und zweiten Transportstrang 9a, 10a.

Die Flaschen 8a könnten an einem Umschaltstern durch Zuschalten einer Steuerkurve auch so verteilt werden, dass im Falle einer Störung oder längerfristigen Produktionsunterbrechung an einem Transportstrang 9a, 10a alle Flaschen 8a des Flaschenstroms 8 auf den jeweils nicht gestörten Transportstrang 9a, 10a umgelenkt werden. Die Blasmaschine 4 könnte dann auch bei Transportvollbesetzung der Blaspositionen 4a mit halber Geschwindigkeit arbeiten.

Unter Transportvollbesetzung wird in den Transportsträngen 9a, 10a die anfängliche Transportteilung 13b, 14b auf die Transportteilung der Füllmaschinen 5, 6 reduziert.

Hierdurch können die Drehzahlen und Transportgeschwindigkeiten nachfolgender Einheiten reduziert werden, um die Problematik eines Überschwappens des eingefüllten Produkts zu minimieren. Zudem können die in den Transportsträngen 9a, 10a, also nach Aufteilung des ursprünglichen Flaschenstroms 8, maximal erforderlichen Maschinenleistungen von je 36.000 Flaschen pro Stunde auch von den im aseptischen Produktionsbereich prinzipiell vorteilhaften Tischplattenfüllern bewältigt werden.

Die Teilströme 9, 10 werden in den Füllmaschinen 5, 6 an allen Füllpositionen 5a, 6a befüllt und in den anschließenden Verschließmaschinen 29, 30 verschlossen.

Die befüllten Teilströme 9, 10 werden entweder nach Zusammenführung oder separat aus der jeweiligen Reinraum-Einhausung 3, 3b, 3c ausgeschleust und können entweder als gemeinsamer Auslaufstrom 8' oder als separate Teilströme 9, 10 stromabwärts auf prinzipiell bekannte Weise etikettiert werden.

Bei Störung / Defekt einer Füllmaschine 5, 6 ist ein gezieltes Einbringen jedes zweiten Vorformlings 8b in das Heizmodul 37 möglich, sodass die noch ordnungsgemäß arbeitende Füllmaschine 5, 6 weiterhin abfüllen kann. Denkbar wäre hierfür auch ein vorübergehendes Ausleiten jedes zweiten Vorformlings 8b nach dem vollbesetzten Heizmodul 37.

Geht eine Füllmaschine 5, 6 und/oder eine Verschließmaschine 29, 30 auf Störung, kann der Sperrstern 91 am Einlauf des Heizmoduls 37 angehalten / gesperrt werden. Die dieser Füllmaschine 5, 6 zugeordneten Flaschen 8a und Vorformlinge 8b können dann ausgeschleust werden, während die andere Füllmaschine 5, 6 weiterhin produziert.

Flaschen 8a, die einer Füllmaschine 5, 6 mit Störung zugeordnet sind, sollen ausgeschleust werden, vorzugsweise nach dem Aufteilstern 12. Um Kollisionen zwischen diesem und den nachfolgenden Teilungsverzugssternen 13, 14 zu verhindern, drehen diese vorzugsweise ständig mit. Die Flaschen 8a können dann an einem Teilungsverzugsstern 13, 14 oder an einem Transferstern 11, falls zusätzlich vorhanden, ausgeschleust werden.

Die Abfüllanlage 1 und das aseptische Abfüllverfahren wurden anhand einer bevorzugten Aufteilung eines einzigen einspurigen Flaschenstroms 8 auf zwei Teilströme 9, 10 bzw. Transportstränge 9a, 10a beschrieben. Prinzipiell wäre aber auch eine Aufteilung mehrerer Flaschenströme 8 und/oder auf eine größere Anzahl von Teilströmen 9, 10 bzw. Transportsträngen 9a, 10a denkbar, beispielsweise durch Parallelschaltung oder Reihenschaltung von Aufteilsternen 12 und entsprechender Anzahl Flaschen 8a abnehmender Teilungsverzugssterne 13, 14 oder dergleichen.

Der Flaschenstrom 8 besteht aus in der Blasmaschine 4 hergestellten Flaschen 8a aus Kunststoff, insbesondere PET. Denkbar ist aber auch eine entsprechende Aufteilung anderer oder zusätzlicher Flaschen 8a aus wenigstens einem einspurigen Flaschenstrom 8 auf Teilströme 9, 10 in der prinzipiell beschrieben Weise.

Grundlegend hierfür ist stets die Aufteilung des Flaschenstroms 8 bei Transportvollbesetzung unmittelbar vor dem Befüllen der Flaschen 8a, um die beschriebene Aufgabe für das verbesserte Befüllen / Verschließen der Flaschen 8a unter aseptischen Bedingungen zu lösen.

Ferner ermöglicht die Bauform des Tischplattenfüllers eine mit geringem Aufwand besonders flexibel und modular zu konstruierende Abfüllanlage für aseptisch abzufüllende Produkte.

Besonders vorteilhaft ist es hierbei, sämtliche Füllmaschinen 5, 6 der Abfüllanlage 1 als Tischplattenfüller auszubilden.

## Patentansprüche

1. Abfüllanlage (1) zur aseptischen Abfüllung flüssiger Produkte, umfassend:
- einen Maschinenblock (2) mit einer Blasmaschine (4) zur Herstellung von Flaschen und zu deren Bereitstellung als Flaschenstrom (8), mit wenigstens einem ersten und zweiten Transportstrang (9a, 10a) umfassend je eine Füllmaschine (5, 6) zum Befüllen der Flaschen, und mit einer Verteileinheit (7) zur Aufteilung des Flaschenstroms auf die Transportstränge bei Transportvollbesetzung derart, dass die Flaschen durchgehend an allen umlaufenden Füllpositionen (5a, 6a) der Füllmaschinen befüllt werden können;
- wenigstens eine den Maschinenblock umgebende Reinraum-Einhausung (3); und
- einen zentralen Produktverteiler (41) zur Versorgung der Füllmaschinen (5, 6) mit abzufüllendem Produkt aus einem gemeinsamen Produktvorrat (43) und/oder einen zentralen Verschlusskappenverteiler (51) zur Versorgung von den Füllmaschinen zugeordneten Verschließmaschinen (29, 30) mit Verschlusskappen aus einem gemeinsamen Vorratsbehälter (52),
wobei wenigstens eine der Füllmaschinen als Tischplattenfüller mit zentraler Sternsäule ausgebildet ist.

2. Abfüllanlage nach Anspruch 1, wobei die Blasmaschine (4) und die Verteileinheit (7) in einer ersten Reinraum-Einhausung (3a), der erste Transportstrang (9a) samt Füllmaschine (5) in einer zweiten Reinraum-Einhausung (3b) und der zweite Transportstrang (9b) samt Füllmaschine (6) in einer dritten Reinraum-Einhausung (3c) angeordnet sind.

3. Abfüllanlage nach Anspruch 2, ferner mit einer Luftaufbereitungseinheit zur gemeinsamen Luftversorgung der ersten, zweiten und dritten Reinraum-Einhausung (3a, 3b, 3c).

4. Abfüllanlage nach Anspruch 2 oder 3, femer mit einer außerhalb der zweiten und dritten Reinraum-Einhausung (3b, 3c) angeordneten Zusammenführeinrichtung (33) zum Zusammenführen der Transportstränge (9a, 10a) auf einen gemeinsamen Auslauftransporteur (34) zum stehenden Transport der befüllten und verschlossenen Flaschen (8a).

5. Abfüllanlage nach Anspruch 1, wobei die Blasmaschine (4) die Transportstränge (9a, 10a) samt Füllmaschinen (5, 6) und die Verteileinheit (7) in einer gemeinsamen Reinraum-Einhausung angeordnet sind.

6. Abfüllanlage nach Anspruch 5, ferner einer innerhalb der gemeinsamen Reinraum-Einhausung angeordneten Zusammenführeinrichtung (33) zum Zusammenführen der Transportstränge auf einen gemeinsamen Auslauftransporteur (34) zum stehenden Transport der befüllten und verschlossenen Flaschen (8a).

7. Abfüllanlage nach wenigstens einem der vorigen Ansprüche, ferner mit den Füllmaschinen (5, 6) jeweils nachgeschalteten und wenigstens eingangsseitig höhenverstellbaren Teilauslauftransporteuren (31, 32) für den stehenden Transport der befüllten und verschlossenen Flaschen (8a).

8. Abfüllanlage nach wenigstens einem der vorigen Ansprüche, wobei der zentrale Produktverteiler (41) ein Ventilknoten ist, über den das Produkt zu den einzelnen Füllventilen der Füllmaschinen (5, 6) geleitet wird.

9. Abfüllanlage nach wenigstens einem der vorigen Ansprüche, wobei die Verteileinrichtung (7) einen Aufteilstern (12) umfasst zur abwechselnden Übergabe jeder zweiten Flasche (8a) des Flaschenstroms (8) an den ersten und zweiten Transportstrang (9a, 10a).

10. Abfüllanlage nach Anspruch 9, wobei der Aufteilstern (12) mittels daran umlaufender Betätigungselemente (21, 22) und zugeordneter stationärer Betätigungselemente (26, 27) aktiv zu öffnende Klammern (15, 16) umfasst, und wobei die dem ersten Transportstrang (9a) zugeordneten Betätigungselemente (21, 26) auf einer ersten gemeinsamen Betätigungsebene (24) und die dem zweiten Transportstrang (10a) zugeordneten Betätigungselemente (22, 27) auf einer zweiten gemeinsamen Betätigungsebene (24) oberhalb oder unterhalb der ersten Betätigungsebene zur bezüglich der Betätigungsebenen voneinander unabhängigen Betätigung der Klammern angeordnet sind.

11. Abfüllanlage nach wenigstens einem der vorigen Ansprüche, wobei die Transportstränge (9a, 10a) jeweils wenigstens einen Teilungsverzugsstern (13, 14) umfassen zur Reduzierung einer ersten Transportteilung (13b, 14b) bei der Aufteilung des Flaschenstroms (8) auf eine demgegenüber kleinere zweite Transportteilung beim Befüllen der Flaschen (8a).

12. Abfüllanlage nach wenigstens einem der vorigen Ansprüche, wobei der Blasmaschine (4) eine Entkeimungseinheit (38) zur Entkeimung von Vorformlingen (8b) vorgeschaltet ist.

13. Abfüllanlage nach wenigstens einem der vorigen Ansprüche, wobei der Verschlusskappenverteiler (51) eine kaskadenförmige Anordnung von Zulaufrinnen (54, 55) ist, die aus dem Vorratsbehälter (52) zu den Verschließmaschinen (29, 30) führen.

## Claims

1. Filling system (1) for the aseptic filling of liquid products, comprising:
- a machine block (2) with a blow molding machine (4) for producing bottles and supplying them as a bottle stream (8), with at least a first and second transport line (9a, 10a) each comprising a filling machine (5, 6) for filling the bottles, and with a distribution unit (7) for distributing the bottle stream to the transport lines when transport is fully occupied, such that the bottles can be filled continuously at all circulating filling positions (5a, 6a) of the filling machines;
- at least one clean room enclosure (3) surrounding the machine block; and
- a central product distributor (41) for supplying the filling machines (5, 6) with product to be filled from a common product supply (43) and/or a central closure cap distributor (51) for supplying closure caps from a common supply container (52) to closure machines (29, 30) assigned to the filling machines, wherein at least one of the filling machines is designed as a tabletop filler with a central star column.

2. Filling system according to claim 1, wherein the blow molding machine (4) and the distribution unit (7) are located in a first clean room enclosure (3a), the first transport line (9a) including the filling machine (5) is arranged in a second clean room enclosure (3b) and the second transport line (9b) including the filling machine (6) is arranged in a third clean room enclosure (3c).

3. Filling system according to claim 2, further comprising an air treatment unit for supplying air to the first, second and third clean room enclosures (3a, 3b, 3c).

4. Filling system according to claim 2 or 3, further comprising a combining device (33) arranged outside the second and third clean room enclosures (3b, 3c) for combining the transport lines (9a, 10a) onto a common discharge conveyor (34) for transporting the filled and sealed bottles (8a) in an upright position.

5. Filling system according to claim 1, wherein the blow molding machine (4), the transport lines (9a, 10a) together with the filling machines (5, 6) and the distribution unit (7) are arranged in a common clean room enclosure.

6. Filling system according to claim 5, further comprising a combining device (33) arranged within the common clean room enclosure for combining the transport lines onto a common discharge conveyor (34) for transporting the filled and sealed bottles (8a) in an upright position.

7. Filling system according to at least one of the previous claims, further comprising partial outlet conveyors (31, 32) which are connected downstream of the filling machines (5, 6) and are heightadjustable at least on the inlet side, for the vertical transport of the filled and closed bottles (8a).

8. Filling system according to at least one of the previous claims, wherein the central product distributor (41) is a valve node via which the product is fed to the individual filling valves of the filling machines (5, 6).

9. Filling system according to at least one of the previous claims, wherein the distribution device (7) comprises a distribution star (12) for alternately transferring every second bottle (8a) of the bottle stream (8) to the first and second transport lines (9a, 10a).

10. Filling system according to claim 9, wherein the distribution star (12) comprises clamps (15, 16) which can be actively opened by means of actuating elements (21, 22) rotating thereon and associated stationary actuating elements (26, 27), and wherein the actuating elements (21, 26) assigned to the first transport line (9a) are arranged on a first common actuation plane (24) and the actuating elements (22, 27) assigned to the second transport line (10a) are arranged on a second common actuation plane (24) above or below the first actuation plane so that the actuating elements are arranged so that they can be actuated independently of each other with respect to the actuation of the clamps.

11. Filling system according to at least one of the previous claims, wherein the transport lines (9a, 10a) each comprise at least one distribution delay star (13, 14) for reducing a first transport distribution (13b, 14b) during the division of the bottle stream (8) to a second transport distribution which is smaller in comparison during the filling of the bottles (8a).

12. Filling system according to at least one of the previous claims, wherein a sterilization unit (38) for sterilizing preforms (8b) is connected upstream of the blow molding machine (4).

13. Filling system according to at least one of the previous claims, wherein the closure cap distributor (51) is a cascade-shaped arrangement of feed channels (54, 55) which lead from the supply container (52) to the closure machines (29, 30).

## Revendications

1. Installation de remplissage (1) pour un remplissage aseptique de produits liquides, comprenant :
- un bloc machine (2) avec une machine de soufflage (4) permettant de produire des bouteilles et de les fournir sous forme de flux de bouteilles (8), avec au moins des première et deuxième lignes de transport (9a, 10a) comprenant respectivement une machine de remplissage (5, 6) permettant de remplir des bouteilles, et avec une unité de distribution (7) permettant de répartir le flux de bouteilles sur les lignes de transport avec une occupation complète du transport, de telle manière que les bouteilles peuvent être remplies en continu au niveau de toutes les positions de remplissage (5a, 6a) périphériques des machines de remplissage ;
- au moins une enceinte de salle blanche entourant le bloc machine (3) ; et
- un distributeur de produit (41) central permettant d'alimenter les machines de remplissage (5, 6) en produit à remplir à partir d'un stock de produit (43) commun et/ou un distributeur de capuchons de fermeture (51) central permettant d'alimenter des machines de fermeture (29, 30) associées aux machines de remplissage en capuchons de fermeture provenant d'un réservoir de stockage (52) commun,
dans laquelle au moins une des machines de remplissage est réalisée sous la forme d'un remplisseur de table avec une colonne centrale en étoile.

2. Installation de remplissage selon la revendication 1, dans laquelle la machine de soufflage (4) et l'unité de distribution (7) sont agencées dans une première enceinte de salle blanche (3a), la première ligne de transport (9a), y compris la machine de remplissage (5), est agencée dans une deuxième enceinte de salle blanche (3b) et la deuxième ligne de transport (9b), y compris la machine de remplissage (6), est agencée dans une troisième enceinte de salle blanche (3c).

3. Installation de remplissage selon la revendication 2, comprenant en outre une unité de traitement d'air permettant une alimentation en air commune des première, deuxième et troisième enceintes de salle blanche (3a, 3b, 3c).

4. Installation de remplissage selon la revendication 2 ou 3, comprenant en outre un dispositif de regroupement (33) agencé à l'extérieur des deuxième et troisième enceintes de salle blanche (3b, 3c) afin de regrouper les lignes de transport (9a, 10a) sur un transporteur de sortie (34) commun permettant de transporter debout les bouteilles (8a) remplies et fermées.

5. Installation de remplissage selon la revendication 1, dans laquelle la machine de soufflage (4), les lignes de transport (9a, 10a), y compris les machines de remplissage (5, 6), et l'unité de distribution (7) sont agencées dans une enceinte commune de salle blanche.

6. Installation de remplissage selon la revendication 5, comprenant en outre un dispositif de regroupement (33) agencé à l'intérieur de l'enceinte commune de salle blanche et permettant de regrouper les lignes de transport sur un transporteur de sortie (34) commun permettant de transporter debout les bouteilles (8a) remplies et fermées.

7. Installation de remplissage selon au moins l'une quelconque des revendications précédentes, comprenant en outre des sous-transporteurs de sortie (31, 32) respectivement montés en aval des machines de remplissage (5, 6) et réglables en hauteur au moins du côté de l'entrée, en vue du transport debout des bouteilles (8a) remplies et fermées.

8. Installation de remplissage selon au moins l'une quelconque des revendications précédentes, dans laquelle le distributeur de produit (41) central est un nœud de vanne par l'intermédiaire duquel le produit est acheminé vers les vannes de remplissage individuelles des machines de remplissage (5, 6).

9. Installation de remplissage selon au moins l'une quelconque des revendications précédentes, dans laquelle le dispositif de distribution (7) comprend une étoile de répartition (12) afin de transférer de manière alternée chaque deuxième bouteille (8a) du flux de bouteilles (8) au niveau des première et deuxième lignes de transport (9a, 10a).

10. Système de remplissage selon la revendication 9, dans lequel l'étoile de répartition (12) comprend des pinces (15, 16) à ouvrir de manière active au moyen d'éléments d'actionnement (21, 22) circulant au niveau de ladite étoile de répartition et d'éléments d'actionnement stationnaires (26, 27) associés, et dans lequel les éléments d'actionnement (21, 26) associés à la première ligne de transport (9a) sont agencés sur un premier plan d'actionnement (24) commun et les éléments d'actionnement (22, 27) associés à la seconde ligne de transport (10a) sont agencés sur un second plan d'actionnement (24) commun au-dessus ou au-dessous du premier plan d'actionnement afin d'actionner les pinces indépendamment les uns des autres par rapport aux plans d'actionnement.

11. Installation de remplissage selon au moins l'une quelconque des revendications précédentes, dans laquelle les lignes de transport (9a, 10a) comprennent respectivement au moins une étoile de retard de répartition (13, 14) afin de réduire, lors de la répartition du flux de bouteilles (8), une première répartition de transport (13b, 14b) à une deuxième répartition de transport comparativement inférieure lors du remplissage des bouteilles (8a).

12. Installation de remplissage selon au moins l'une quelconque des revendications précédentes, dans laquelle une unité de stérilisation (38) permettant de stériliser des préformes (8b) est montée en amont de la machine de soufflage (4).

13. Installation de remplissage selon au moins l'une quelconque des revendications précédentes, dans laquelle le distributeur de capuchons de fermeture (51) est un agencement en cascade de goulottes d'alimentation (54, 55) qui mènent du réservoir de stockage (52) aux machines de fermeture (29, 30).
